(19) **Europäisches Patentamt**
**European Patent Office**
**Office européen des brevets**

(11) **EP 2 653 887 B1**

(12) **FASCICULE DE BREVET EUROPEEN**

(45) Date de publication et mention
de la délivrance du brevet:
**18.05.2016 Bulletin 2016/20**

(51) Int Cl.:
***G01S 13/34*** *(2006.01)* ***G01S 7/02*** *(2006.01)*
***G01S 13/88*** *(2006.01)*

(21) Numéro de dépôt: **13164521.0**

(22) Date de dépôt: **19.04.2013**

(54) **Système de radio adapté pour fonctionner dans une installation de radio altimétrie multiple**

Funksystem für den Gebrauch in einer Funkanlage mit Mehrfachhöhenmessung

Radio system capable of operating in a multiple radio altimeter system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2012 FR 1201175**

(43) Date de publication de la demande:
**23.10.2013 Bulletin 2013/43**

(73) Titulaire: **Thales**
**92200 Neuilly Sur Seine (FR)**

(72) Inventeurs:
• **Lys, Sébastien**
**92622 Gennevilliers Cedex (FR)**
• **André, Jean-Jacques**
**92622 Gennevilliers Cedex (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**DE-A1-102006 020 943 US-A1- 2004 130 482**
**US-A1- 2008 284 641 US-A1- 2009 303 104**
**US-A1- 2010 085 233**

## Description

La présente invention concerne un système de radio altimétrie apte à être fixé à un aéronef et à fournir une distance dudit aéronef par rapport à une surface, adapté pour fonctionner dans une installation de radio altimétrie multiple comportant au moins deux tels systèmes de radio altimétrie.

Des systèmes de radio altimétrie, utilisés dans le domaine de l'aéronautique civile ou militaire, sont plus généralement connus sous le nom de radioaltimètres.

Un radioaltimètre est un instrument installé à bord d'un aéronef et apte à fournir la hauteur de l'aéronef par rapport au sol ou à une surface survolée. Un radioaltimètre est en particulier utilisé pendant les phases de vol automatique ou les phases de vol critiques, telles que l'approche, l'atterrissage et le décollage. La mesure de hauteur fournie par le radioaltimètre peut par ailleurs être utilisée pour diverses applications calculatoires mises en oeuvre par ordinateur de bord, comme par exemple le recalage de la position de l'aéronef par rapport à une carte pré-établie du terrain survolé.

Dans l'état de la technique, on connaît différents types de radioaltimètres, le principe général de tels instruments étant de mesurer la hauteur en mesurant le temps de propagation de signaux radioélectriques émis et reçus après réflexion au sol.

En particulier, il est connu d'utiliser l'émission continue d'onde radioélectrique modulée en fréquence par un signal de modulation comportant des rampes, à pente sensiblement linéaire, selon une excursion de fréquence ou pente $\delta F$, connue sous le nom de modulation FMCW pour « frequency-modulated continuous wave ». Dans le domaine civil, la bande de fréquence utilisée est de 4.2 à 4.4 GHz. Après réflexion sur le sol, une onde radioélectrique réfléchie est reçue en écho après une durée $\tau$ qui est fonction de la hauteur de l'aéronef et permet donc de calculer cette hauteur.

Afin d'assurer la sécurité et le bon fonctionnement dans les phases de vol critique ou les phases de vol automatique, notamment pour le transport de passagers, il est courant de positionner plusieurs radioaltimètres sur un aéronef. Pour certaines utilisations, trois radioaltimètres sont utilisés pour garantir la sécurité en cas de défaillance.

Le fait de positionner plusieurs radioaltimètres sur un aéronef peut induire des interférences, l'onde radioélectrique émise par un radioaltimètre pouvant être captée comme onde radioélectrique réfléchie par un autre radioaltimètre. Ce type d'interférences entre deux systèmes de radio altimétrie induit potentiellement des erreurs de mesure de la hauteur de l'aéronef, en particulier lorsque l'onde radioélectrique réfléchie d'un premier radioaltimètre est synchronisée avec l'onde radioélectrique émise par un deuxième autre radioaltimètre.

Afin de réduire ces perturbations, une solution connue de l'état de la technique consiste à positionner les systèmes de radio altimétrie, et en particulier leurs antennes d'émission/réception, selon des recommandations de distance, comme préconisées par exemple par le standard ARINC707, permettant d'assurer le découplage complet des ondes radioélectriques émises et réfléchies. Cependant, ces recommandations sont difficiles à respecter sur des petits aéronefs, tels des drones. De plus, il est possible, malgré le respect des recommandations, de rencontrer des interférences pour certaines configurations du terrain survolé.

Alternativement, il est connu dans l'état de la technique de prévoir des radioaltimètres fonctionnant avec des signaux de modulation à pente fixe, mais dont la fréquence de répétition des rampes varie de manière prédéterminée, ou dont la durée des rampes est variable.

Le document US2004/130482 A1 décrit des radioaltimètres à fréquence de répétition de rampes aléatoire et pentes de ces rampes variables.

Ce type de configuration ne supprime pas totalement les erreurs dues aux interférences, qui peuvent arriver de manière cyclique. De plus, ces fonctionnements différents étant prédéfinis, la configuration du signal de modulation doit être fixée à la fabrication. Par conséquent, un coût supplémentaire est induit par la fabrication différenciée de tels systèmes en vue de leur utilisation dans une installation multiple.

L'invention a pour objet de remédier aux inconvénients de l'état de la technique, permettant de fournir des systèmes de radio altimétrie fiables dans une installation multiple, tout en évitant un surcoût de fabrication de tels systèmes.

A cet effet, selon un premier aspect, l'invention propose un système de radio altimétrie apte à être fixé à un aéronef et à fournir une distance dudit aéronef par rapport à une surface, adapté pour fonctionner dans une installation de radio altimétrie multiple comportant au moins deux tels systèmes de radio altimétrie, ledit système de radio altimétrie comportant un générateur d'onde radioélectrique modulée en fréquence par un signal de modulation comportant une répétition de séquences de variation de fréquence, deux séquences successives étant séparées par un palier d'attente de durée variable.

Le système de radio altimétrie est caractérisé en ce qu'il comporte des moyens d'obtention d'un identifiant permettant de distinguer ledit système de radio altimétrie de tout autre système de radio altimétrie de ladite installation multiple et des moyens de sélection d'une configuration des paliers d'attente pour ledit signal de modulation en fonction de l'identifiant obtenu.

Avantageusement, le système de radio altimétrie selon l'invention est paramétrable dynamiquement, dans la mesure où la configuration des paliers d'attente variables est sélectionnée en fonction de l'identifiant du système obtenu lors de la mise en fonctionnement. Ainsi, un tel système peut être utilisé seul ou dans une installation à plusieurs systèmes de radio altimétrie, la sécurité de fonctionnement étant assurée dans ce cas, car les paliers d'attente sont pré-configurés pour minimiser les risques d'interférences de synchronisation des rampes émises par les systèmes de radio altimétrie de l'installation. De plus, il n'est pas nécessaire de mettre en oeuvre une fabrication différenciée pour chaque système de radio altimétrie dans une installation multiple, ce qui réduit les coûts de fabrication.

Le système de radio altimétrie selon l'invention peut présenter une ou plusieurs des caractéristiques ci-dessous :

- ladite configuration des paliers d'attente définit les durées variables desdits paliers d'attente, lesdites durées étant obtenues par application d'un générateur de nombres pseudo-aléatoires ;
- ledit générateur de nombres pseudo-aléatoires comporte l'application d'un polynôme prédéterminé ;
- ladite installation multiple comporte un nombre maximal prédéterminé N supérieur ou égal à deux de tels systèmes de radio altimétrie, et le système comprend des moyens de mémorisation de N générateurs de nombres pseudo-aléatoires ;
- lesdits moyens de mémorisation sont aptes à mémoriser un polynôme de génération de nombre pseudo-aléatoires prédéterminé et N valeurs d'initialisation différentes, un dit générateur de nombres pseudo-aléatoires étant obtenu par application dudit polynôme avec une desdites valeurs d'initialisation ;
- l'identifiant est un nombre codé sur un nombre prédéterminé de bits qui est dépendant du nombre maximal prédéterminé N de systèmes de radio altimétrie dans ladite installation multiple ;
- il comporte en outre des moyens de réception d'onde radioélectrique, des moyens de soustraction de l'onde radioélectrique émise et de l'onde radioélectrique reçue pour former un signal de battement et des moyens de filtrage dudit signal de battement dans une bande de fréquences prédéterminée, et
- les moyens d'obtention de l'identifiant comportent des moyens de lecture d'un identifiant introduit par un opérateur via une interface adaptée.

Selon un deuxième aspect, l'invention concerne une installation de radio altimétrie multiple comportant au moins deux systèmes de radio altimétrie tels que brièvement décrits ci-dessus.

D'autres caractéristiques et avantages de l'invention ressortiront de la description qui en est donnée ci-dessous, à titre indicatif et nullement limitatif, en référence aux figures annexées, parmi lesquelles :

- la figure 1 illustre schématiquement un aéronef équipé d'une installation à deux systèmes de radio altimétrie ;
- la figure 2 illustre graphiquement une onde radioélectrique émise et reçue par un système de radio altimétrie de type FMCW et le signal de battement théorique extrait ;
- la figure 3 illustre les ondes radioélectriques émises par trois systèmes de radio altimétrie selon une mise en oeuvre de l'invention ;
- la figure 4 est un synoptique d'un système de radio altimétrie selon un mode de réalisation de l'invention.

L'invention sera décrite plus particulièrement dans le cas où le système de radio altimétrie est un radioaltimètre, apte à fournir une mesure de distance par rapport au sol ou à une surface survolée par un aéronef, par exemple un avion ou un hélicoptère.

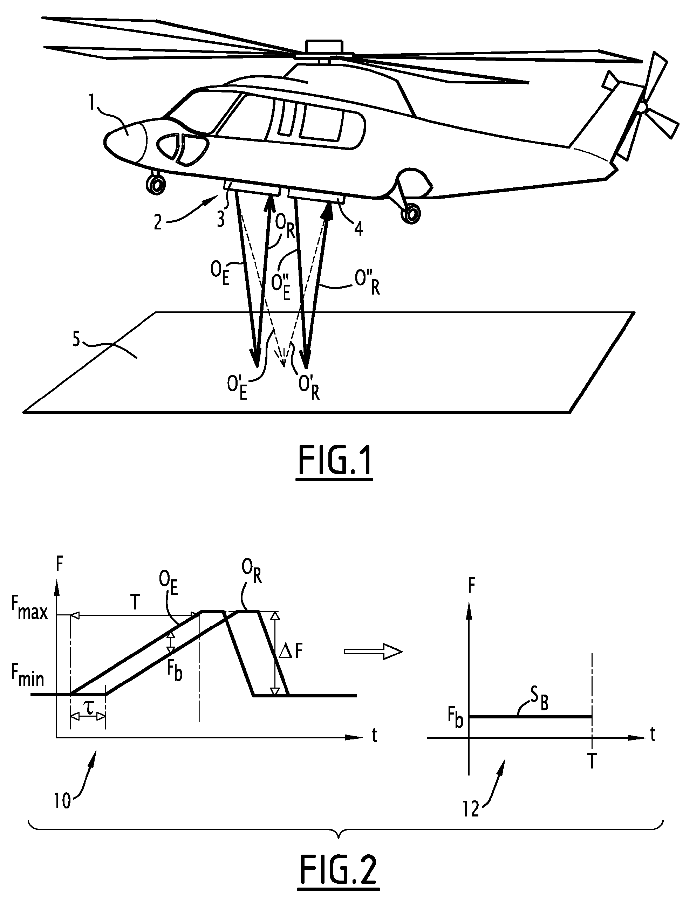

La figure 1 illustre de manière schématique un aéronef 1 muni d'une installation de radio altimétrie 2 comportant deux radioaltimètres 3 et 4, apte à émettre chacun, via une antenne d'émission, une onde radioélectrique ou un faisceau d'ondes radioélectriques émises notées $O_E$, chaque onde radioélectrique émise étant modulée en fréquence, par exemple selon un signal comportant des rampes de variation de fréquence s'échelonnant entre une valeur $F_{min}$ et une valeur $F_{max}$, selon une excursion de fréquence $\Delta F = abs(F_{max}-F_{min})$, où *abs* représente la valeur absolue, comme représenté schématiquement dans le graphe représenté à la figure 2. Les ondes radioélectriques $O_E$ se réfléchissent sur le sol 5, et produisent des ondes réfléchies $O_R$.

Sur la figure 1 est également illustré le phénomène d'interférence qui peut potentiellement se produire : une onde radioélectrique $O'_E$ émise par le radioaltimètre 3 est réfléchie et reçue par le radioaltimètre 4 comme onde reçue $O'_R$, et elle est traitée par le radioaltimètre 4 comme une onde réfléchie en réponse à une autre onde radioélectrique $O''_E$ émise par le radioaltimètre 4, ce qui crée des erreurs de mesure.

En fonctionnement nominal, comme illustré à la figure 2, un radioaltimètre de type FMCW émet une onde radioélectrique modulée selon une rampe de fréquence ayant une excursion de fréquence $\Delta F$. Dans l'exemple de la figure 2, la rampe de fréquence illustrée dans le graphe temps-fréquence 10 est une rampe montante, de pente positive, de durée temporelle T, typiquement aux alentours de 50 ms.

La rampe montante est suivie d'un palier haut, d'une rampe descendante, d'un palier bas de durée variable, puis la même séquence « rampe montante - palier haut-rampe descendante - palier bas » est répétée (la répétition de la rampe n'est pas illustrée à la figure 2), formant ainsi le signal de modulation.

Une forme d'onde réfléchie $O_R$ est reçue en écho, après réflexion sur le sol, avec un décalage temporel de $\tau$ ms. Ainsi, à un instant temporel t, la différence fréquentielle entre l'onde émise et l'onde reçue est de $F_b$. Cette différence de fréquence est appelée fréquence de battement. Le signal de battement $S_B$ est illustré dans le graphe temps-fréquence 12 de la figure 2.

Théoriquement, si la surface survolée est plane, la fréquence de battement est constante pendant toute la durée T d'émission de la rampe montante. La mesure de la fréquence de battement permet de calculer la hauteur H par rapport à la surface survolée, étant donné les formules :

$$H = \frac{c \times \tau}{2}$$

où c est la vitesse de la lumière.

On en déduit une mesure de la hauteur H à partir de la fréquence de battement F_b:

$$H = \frac{c}{2} \times \frac{T}{\Delta F} \times F_b$$

On comprend que la fréquence de battement $F_b$ extraite est erronée dans le cas où l'onde reçue utilisée n'est pas l'onde effectivement réfléchie en écho à l'onde émise, mais une onde de forme analogue émise par l'autre système de radio altimétrie, et qu'il s'ensuit une mesure de hauteur H erronée.

Ce problème est d'autant plus important lorsque plus de deux systèmes de radio altimétrie, par exemple trois ou quatre systèmes, sont utilisés dans une même installation, induisant potentiellement encore plus d'erreur de mesure de la hauteur.

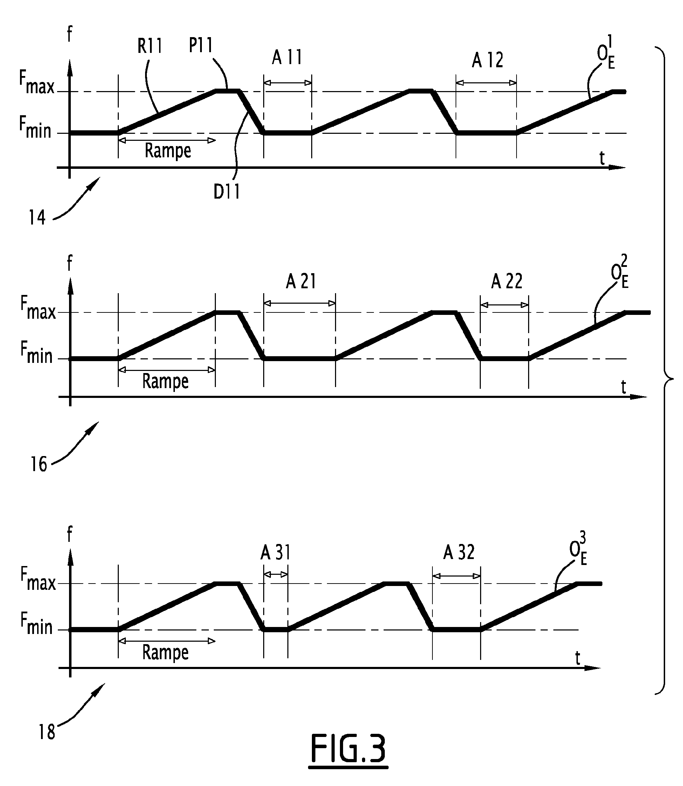

Selon un mode de réalisation de l'invention illustré à la figure 3, il est proposé de différencier suffisamment les ondes émises respectivement par chaque système de radio altimétrie de l'installation 2, tout en conservant la même performance pour chacun de ces systèmes lorsqu'il est utilisé seul.

Dans la figure 3, le cas de trois radioaltimètres fonctionnant dans une installation est illustré, les formes d'ondes $O_E^1$, $O_E^2$ et $O_E^3$, émises par chacun des radioaltimètres étant respectivement représentées dans les graphes temps-fréquence 14, 16 et 18.

Chaque onde émise $O_E^k, 1 \leq k \leq 3$ est composée d'une répétition de séquences, chaque séquence comportant une rampe notée R11 pour l'onde $O_E^1$ qui est une rampe montante, un palier haut P11 et une rampe descendante D11. Cette séquence est suivie d'un palier d'attente A11 de durée variable, puis répétée. Comme illustré à la figure 3, les paliers d'attente respectifs A11 et A12 de l'onde émise $O_E^1$ sont de durées variables.

On appelle configuration des paliers d'attente les durées respectives assignées aux paliers d'attente successifs.

Comme illustré à la figure 3, selon un mode de réalisation de l'invention, les paliers d'attente respectifs des ondes à émettre par les divers systèmes de radio altimétrie sont de durées différentes, sélectionnées de manière à assurer qu'une synchronisation des séquences émises ne se reproduit ni pour des séquences successives, ni de manière cyclique. Ceci est réalisé par l'utilisation de générateurs de nombres pseudo-aléatoires pour assigner les durées des paliers d'attente.

Ainsi, les premières séquences des ondes émises respectives $O_E^1$, $O_E^2$ et $O_E^3$ sont synchronisées, mais les durées des paliers d'attente A11, A21 et A31 sont différentes, ce qui assure la non synchronisation dès la séquence rampe montante-palier haut-palier bas suivante et ainsi de suite.

Dans le mode de réalisation préféré, les durées de paliers d'attente sont générées, pour chaque système de radio altimétrie, par un polynôme Pi de génération de nombres pseudo-aléatoires.

Selon un mode de réalisation, on utilise un même polynôme de génération de nombres pseudo-aléatoires avec des valeurs d'initialisation différentes.

Selon une variante, un polynôme spécifique est utilisé pour générer une configuration des paliers d'attente, les polynômes spécifiques étant choisis de telle manière que la décorrélation des valeurs pseudo-aléatoires obtenues soit assurée.

Lors de la mise en fonctionnement d'une installation à plusieurs radioaltimètres, un identifiant est obtenu pour chaque radioaltimètre, pour les différencier entre eux. En fonction de l'identifiant, un des polynômes de génération de nombres pseudo-aléatoires stocké au préalable est sélectionné, et ce polynôme est utilisé pour la génération de durées des paliers d'attente.

De préférence, l'identifiant est une valeur discrète codée par exemple sur un bit pour différencier entre deux systèmes ou sur deux bits pour différencier entre quatre systèmes. Selon un mode de réalisation, l'identifiant est un identifiant SDI (pour « Source Destination Identifier ») tel que défini dans le standard ARINC 707.

Avantageusement, la différentiation fonctionnelle des systèmes de radio altimétrie se fait uniquement lors de l'utilisation, leur mise au point initiale étant identique, car des séquences successives de même forme sont générées, et un nombre N de générateurs de nombres pseudo-aléatoires, correspondant un nombre maximal N de radioaltimètres à utiliser dans une installation est pré-stocké, ce qui réduit les coûts de fabrication.

Les polynômes de génération de nombres pseudo-aléatoires sont choisis au préalable pour assurer un décalage suffisant des rampes successives des systèmes mis en oeuvre. De plus, les nombres pseudo-aléatoires générés sont contraints pour assurer l'efficacité du système : la valeur maximale de l'aléa est contrainte par la cadence à laquelle la mesure de hauteur doit être fournie et la valeur minimale est déterminée par des limitations matérielles du radioaltimètre, en particulier le temps nécessaire pour recommencer une émission de rampe.

En variante du mode de réalisation décrit ci-dessus, les durées des paliers hauts sont configurées pour être variables, en plus ou à la place des durées des paliers bas. Ces durées sont également générées de manière pseudo-aléatoire et de manière à assurer un décalage suffisant entre les rampes émises.

Le mode de réalisation de la figure 3 a été décrit avec une séquence formée d'une rampe montante, d'un palier haut et d'une rampe descendante. Toutes variantes à ce type de séquence s'appliquent, par exemple une séquence comprenant une rampe descendante de durée T, suivie d'un palier bas et d'une rampe montante, ou bien un signal de modulation de type triangulaire une rampe montante suivie d'une rampe descendante et d'un palier d'attente, ou vice-versa, une rampe descendante suivie d'une rampe montante et d'un palier d'attente.

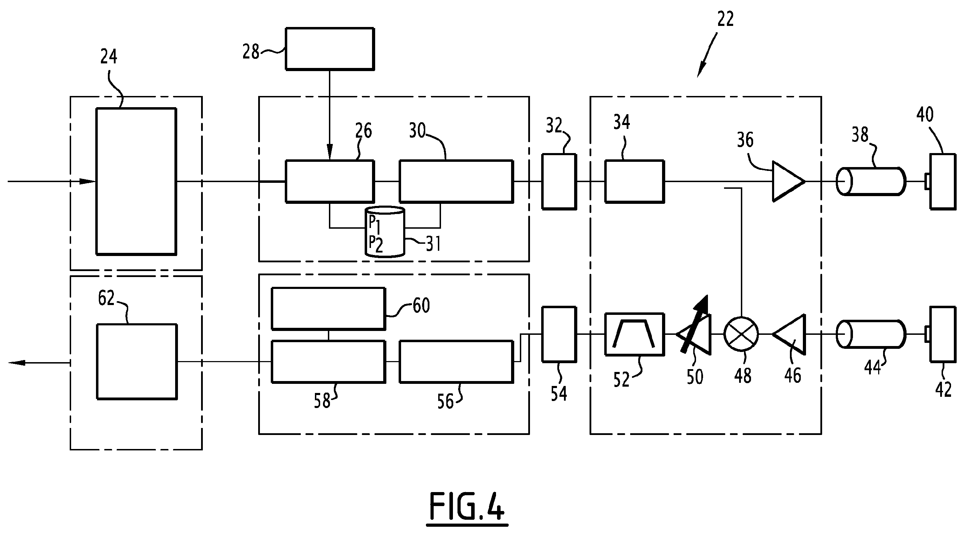

La figure 4 est un synoptique d'un système de radio altimétrie 22 selon un mode de réalisation de l'invention.

Le système de radio altimétrie 22 comporte un module 24 d'interface de démarrage.

Il comporte également un module 26 d'obtention d'un identifiant, l'identifiant étant introduit par des moyens 28 appropriés, par exemple par une interface graphique présentée à un opérateur lors de l'installation du système ou un bouton positionnable par l'opérateur.

Dans un mode de réalisation, l'identifiant est une valeur numérique discrète codée sur un nombre donné B de bits, le nombre B étant en rapport avec le nombre maximal de systèmes de radio altimétrie à utiliser dans une installation. Par exemple, pour un maximum de N=4, B=2, ce qui permet de différencier les systèmes de radio altimétrie, par exemple en assignant les identifiants respectifs 0, 1, 2 et 3. De manière générale, N=2$^B$. Cette valeur numérique discrète définissant l'identifiant d'un système de radio altimétrie donné est renseignée à l'installation, insérée dans une structure de données appropriée mémorisée dans un registre, et lue par le module 26 lors de la mise en fonctionnement de chaque système.

L'identifiant obtenu est utilisé pour sélectionner une configuration des paliers d'attente séparant les séquences répétitives du signal de modulation généré dans un module 30 de génération de signal modulé.

De préférence, l'identifiant obtenu permet de sélectionner un polynôme Pi de génération de séquences de nombres pseudo-aléatoires, comme décrit ci-dessus en référence à la figure 3. Les données nécessaires pour obtenir N générateurs de nombres pseudo-aléatoires sont préalablement stockées dans des moyens de mémorisation 31. Dans un mode de réalisation, un seul polynôme de génération de nombres pseudo-aléatoires et N valeurs d'initialisation sont stockés dans la mémoire 31.

En variante, N polynômes différents de génération de nombres pseudo-aléatoires sont stockés dans la mémoire 31.

Un module de conversion numérique-analogique 32 convertit le signal modulé obtenu par le module 30 en signal analogique ou onde radioélectrique.

Un module 34, réalisé par exemple par un oscillateur VCO, transforme l'onde radioélectrique issue du module 32 en onde à rampe de fréquence, qui est ensuite amplifiée par l'amplificateur 36. L'antenne d'émission 38 couplée à un émetteur 40 effectue l'émission de l'onde radioélectrique O$_E$ modulée en fréquence.

Côté réception, un récepteur 42 couplé à une antenne de réception 44 est apte à recevoir l'onde radioélectrique réfléchie O$_R$. Un amplificateur 46 amplifie l'onde reçue.

Un module 48 de génération du signal de battement S$_B$ effectue la soustraction de l'onde radioélectrique O$_E$ émise et l'onde radioélectrique reçue O$_R$, réalisé typiquement, de façon connue, par un mélangeur homodyne.

Le signal de battement S$_B$ est ensuite amplifié par un amplificateur 50, puis filtré par un module de filtrage 52. Le filtrage consiste à ne conserver que le signal dont le spectre est contenu dans une bande de fréquence [f$_{min}$,f$_{max}$] prédéterminée, où $abs$(f$_{max}$-f$_{min}$)=dF.

Une conversion analogique-numérique 54 est ensuite effectuée, puis le signal numérique obtenu est fourni à un module de transformation spectrale 56, qui applique par exemple une transformation de Fourier (FFT), puis le résultat de la transformation est fourni au module 58 d'extraction de la fréquence de battement, suivi de l'application du calcul de la hauteur estimée par le module 60. Le résultat du calcul de la hauteur ou distance de l'aéronef par rapport au sol, et éventuellement des alarmes et d'autres informations sont fournies à l'opérateur ou à une application utilisatrice via une interface 62.

Avantageusement, des systèmes de radio altimétrie proposés sont faciles à fabriquer de manière non différenciée, et ils permettent un fonctionnement sûr et efficace à la fois lorsqu'ils sont utilisés seuls et lorsqu'ils sont utilisés dans une installation de radio altimétrie multiple.

## Revendications

**1.** Système de radio altimétrie apte à être fixé à un aéronef et à fournir une distance dudit aéronef par rapport à une surface, adapté pour fonctionner dans une installation de radio altimétrie multiple (2) comportant au moins deux tels systèmes de radio altimétrie, ledit système de radio altimétrie comportant un générateur d'onde radioélectrique modulée en fréquence par un signal de modulation comportant une répétition de séquences de variation de fréquence, deux séquences successives étant séparées par un palier d'attente de durée variable, **caractérisé en ce qu'**il comporte des moyens d'obtention (26) d'un identifiant permettant de distinguer ledit système de radio altimétrie de tout autre système de radio altimétrie de ladite installation multiple (2), des moyens de sélection (30) d'une configuration des paliers d'attente pour ledit signal de modulation en fonction de l'identifiant obtenu, ladite configuration des paliers d'attente définissant les durées variables desdits paliers d'attente, lesdites durées étant obtenues par application d'un générateur de nombres pseudo-aléatoires, ledit générateur de nombres pseudo-aléatoires comportant l'application d'un polynôme prédéterminé,

ladite installation multiple comportant un nombre maximal prédéterminé N supérieur ou égal à deux de tels systèmes de radio altimétrie,

le système de radio altimétrie comportant en outre des moyens (31) de mémorisation de N générateurs de nombres pseudo-aléatoires, aptes à mémoriser un polynôme de génération de nombres pseudo-aléatoires prédéterminé et N valeurs d'initialisation différentes, un dit générateur de nombres pseudo-aléatoires étant obtenu par application dudit polynôme avec une desdites valeurs d'initialisation.

2. Système de radio altimétrie selon la revendication 1, **caractérisé en ce que** l'identifiant est un nombre codé sur un nombre prédéterminé de bits qui est dépendant du nombre maximal prédéterminé N de systèmes de radio altimétrie dans ladite installation multiple.

3. Système de radio altimétrie selon l'une des revendications précédentes, **caractérisé en ce qu'**il comporte en outre des moyens de réception (42, 44) d'onde radioélectrique, des moyens de soustraction (48) de l'onde radioélectrique émise et de l'onde radioélectrique reçue pour former un signal de battement et des moyens de filtrage (52) dudit signal de battement dans une bande de fréquences prédéterminée.

4. Système de radio altimétrie selon l'une des revendications précédentes, **caractérisé en ce que** les moyens d'obtention (26) de l'identifiant comportent des moyens de lecture d'un identifiant introduit par un opérateur via une interface (28) adaptée.

5. Installation de radio altimétrie multiple comportant au moins deux systèmes de radio altimétrie selon l'une des revendications 1 à 4.

**Patentansprüche**

1. Höhenvermessungsfunksystem, welches geeignet ist, an einem Flugzeug befestigt zu werden und einen Abstand des Flugzeugs zu einer Oberfläche zu liefern, welches eingerichtet ist, in einer Mehrfach-Höhenvermessungsfunksvorrichtung (2) zu arbeiten, welche mindestens zwei solche Höhenvermessungsfunksysteme aufweist, wobei das Höhenmessungsfunksystem einen Generator von Funkwelle aufweist, welche durch ein Modulationssignal frequenzmoduliert wird, welches eine Wiederholung von Frequenzvariationsfolgen aufweist, wobei zwei aufeinanderfolgende Folgen durch einen Wartephase variabler Dauer getrennt sind, **dadurch gekennzeichnet, dass** es Mittel zum Erhalten (26) einer Kennung, welche ermöglicht, das Höhenvermessungsfunksystem von jedem anderen Höhenvermessungsfunksystem der Mehrfach-Vorrichtung (2) zu unterscheiden, Auswahlmittel (30) einer Konfiguration der Wartephase für das Modulationssignal abhängig von der erhaltenen Kennung aufweist, wobei die Konfiguration der Wartephase die variable Dauer der Wartephase definiert, wobei die Dauer durch Anwendung eines Pseudo-Zufallszahlengenerators erhalten wird, wobei der Pseudo-Zufallszahlengenerator die Anwendung eines vorbestimmten Polynoms aufweist,

wobei die mehrfache Vorrichtung eine vorbestimmte maximale Anzahl N aufweist, welche größer als oder gleich zwei solcher Höhenvermessungsfunksysteme ist,

wobei das Höhenvermessungsfunksystem zusätzlich Mittel (31) zum Speichern von N Pseudo-Zufallszahlengeneratoren aufweist, welche zum Speichern eines vorbestimmten Polynoms von Pseudo-Zufallszahlengeneratoren und N unterschiedlichen Initialisierungswerten geeignet ist, wobei einer Pseudo-Zufallszahlengenerator durch Anwendung des Polynoms mit einem der Initialisierungswerte erhalten wird.

2. Höhenvermessungsfunksystem nach Anspruch 1, **dadurch gekennzeichnet, dass** die Kennung eine auf eine vorbestimmte Anzahl von Bits codierte Zahl ist, welche von der vorbestimmten maximalen Anzahl N von Höhenvermessungsfunksystemen in der Mehrfach-Vorrichtung abhängig ist.

3. Höhenvermessungsfunksystem nach einem der vorhergehenden Ansprüche, **dadurch gekennzeichnet, dass** es zusätzlich Mittel (42, 44) zum Empfangen der Funkwelle, Mittel (48) zum Subtrahieren der gesendeten Funkwelle und der empfangenen Funkwelle zum Bilden eines Schwebungssignals und Mittel (52) zum Filtern des Schwebungssignals in einem vorbestimmten Frequenzband.

4. Höhenvermessungsfunksystem nach einem der vorhergehenden Ansprüche, **dadurch gekennzeichnet, dass** die Mittel zum Erhalten (26) der Kennung Mittel zum Lesen einer Kennung aufweisen, welche durch eine Bedienungsperson über eine geeignete Schnittstelle (28) eingegeben wird.

5. Mehrfach-Höhenvermessungsfunkvorrichtung eines Höhevermessungsfunks aufweisend mindestens zwei Höhenvermessungsfunksysteme nach einem der Ansprüche 1 bis 4.

**Claims**

1. A radio altimetry system that can be fixed to an aircraft and provide the distance of that aircraft from the surface, capable of operating in a multiple radio altimetry installation (2) including at least two such radio altimetry systems, said radio altimetry system including a frequency-modulated radio wave generator using a modulation signal including a repetition of frequency variation sequences, two successive sequences being separated by a variable duration waiting plateau,

**characterized in that** it includes means (26) for obtaining an identifier making it possible to distinguish said radio altimetry system from any other radio altimetry system of said multiple installation (2), means (30) for selecting a configuration of the waiting plateaus for said modulation signal as a function of the obtained identifier, said configuration of the waiting plateaus defining the variable durations of said waiting plateaus, said durations being obtained by applying a pseudo-random number generator, said pseudo-random number generator comprising applying a predetermined polynomial,

said multiple installation comprising a predetermined maximum number N greater than or equal to two of such radio altimetry systems,

the system further comprising storage means (31) for N pseudo-random number generators, capable of storing a predetermined pseudo-random number generation polynomial and N different initialization values, one said pseudo-random number generator being obtained by applying said polynomial with one of said initialization values.

2. The radio altimetry system according to claim 1, **characterized in that** the identifier is a number encoded on a predetermined number of bits that depends on the predetermined maximum number N of radio altimetry systems in said multiple installation.

3. The radio altimetry system according to one of the preceding claims, **characterized in that** it further includes means (42, 44) for receiving radio waves, means (48) for subtracting the transmitted radio wave and the received radio wave to form a beat signal and means (52) for filtering said beat signal in a predetermined frequency band.

4. The radio altimetry system according to one of the preceding claims, **characterized in that** the means (26) for obtaining the identifier include means for reading an identifier introduced by an operator using a suitable interface (28).

5. A multiple radio altimetry installation including at least two radio altimetry systems according to one of claims 1 to 4.

## FIG.1

## FIG.2

## FIG.3

FIG.4

**EP 2 653 887 B1**

## RÉFÉRENCES CITÉES DANS LA DESCRIPTION

**Documents brevets cités dans la description**

• US 2004130482 A1